Europäisches Patentamt

European Patent Office

Office européen des brevets

(11) Publication number: **0 298 731**
**A1**

## EUROPEAN PATENT APPLICATION

(21) Application number: 88306179.8

(22) Date of filing: 07.07.88

(51) Int. Cl.4: **B29C 55/00** , **C08J 5/18**

(30) Priority: 08.07.87 GB 8716027

(43) Date of publication of application:
**11.01.89 Bulletin 89/02**

(84) Designated Contracting States:
**ES GR**

(71) Applicant: COURTAULDS FILMS &
PACKAGING (HOLDINGS) LTD.
Bath Road
Bridgwater Somerset TA6 4PA(GB)

(72) Inventor: Marsh, Matthew John
7 Bowerings Road
Bridgwater Somerset(GB)

(74) Representative: Claisse, John Anthony, Dr.
Courtaulds Films & Packaging (Holdings) Ltd
Bath Road
Bridgwater Somerset TA6 4PA(GB)

(54) **Voided polypropylene films.**

(57) This invention concerns oriented and voided polypropylene films having increased rigidity, tensile strength and impact resistance compared with hitherto proposed oriented and voided films. This is achieved by the films having a melt flow index of from 1.5 to 18.0 and a polydispersity index of from 3.0 to 5.5. Films of low density, in particular of less than 0 69g/cm$^3$, can be achieved while having these desired improvements in physical properties.

EP 0 298 731 A1

EP 0 298 731 A1

## VOIDED POLYPROPYLENE FILMS

This invention concerns oriented and voided polypropylene films.

It is known to produce oriented and voided polypropylene films. Typically, a melt of polypropylene containing from 1 to 30 weight per cent of chalk particles having a mean particle size of from 1 to 10 microns is extruded and thereafter oriented, usually biaxially, to induce voids at the sites of the chalk particles. In order to provide the films with various properties, for example heat sealability, one or more layers can be applied to either or both sides of the films. Such layers can be formed by co-extrusion of the material for forming the layers with the polypropylene containing the particulate material.

The resultant films have found wide acceptance as packaging materials.

The process of forming voids in the polypropylene results in the density of the film being lower than that of unvoided polypropylene. Thus voided films having densities of 0.69 g/cm$^3$ can be produced from polypropylene having a density of 0.91/cm$^3$ by the use of calcium carbonate in amounts of about 4% by weight. This has obvious commercial advantages since for a given weight of polypropylene and a particular thickness of resultant film, larger areas of film can be produced. The yield of film therefore increases as the density of the film is decreased.

There are, however, limits to the reduction in density which can be achieved without adversely affecting the physical properties of the resultant film. High loadings of particulate material will produce more voids, but the resultant films can lack strength and they often have an unsatisfactory appearance.

According to the present invention there is provided a voided polypropylene film, the polypropylene used to prepare the film having a melt flow index of 1.5 to 18.0 and a polydispersity index of from 3.0 to 5.5.

The polypropylene films of the present invention have particularly good physical properties compared with known oriented and voided polypropylene films. At comparable loadings of particulate material and using the same conditions for extrusion and subsequent orientation, films of the present invention have shown increased rigidity, increased tensile strength and increased impact resistance. In addition to achieving films having these properties, it is possible to produce films with satisfactory physical properties comparable with those of known oriented and voided polypropylene film but with lower density. The yield of film can thereby be increased.

It is possible to produce oriented and voided polypropylene films having good physical properties with densities of less than 0.69 g/cm$^3$, for example from 0.67 to 0.60 g/cm$^3$, by the use of polypropylene having melt index and polydispersity index values as specified with calcium carbonate contents of about 4% by weight.

The melt flow index of the polypropylene should be from 1.5 to 18.0 as measured by ASTM method D1238 at 230°C (condition L), and it is preferably from 2.5 to 6.0.

The polydispersity index of the polypropylene should be from 3.0 to 5.5 as measured by the method of G. R. Zeichner and P. D. Patel ("A comprehensive evaluation of polymer melt rheology", Proceedings of 2nd World Congress of Chem. Eng., Vol. 6, page 333, Montreal, 1981), preferably from 3.5 to 4.2. The polydispersity index of a polymer is a measure of the spread of molecular weight distribution in the polymer, and it is inversely proportional to the crossover modulus of the polymer under oscillatory shear.

Polypropylene having the desired rheological properties can be produced by modifying the molecular weight distribution of known grades of polypropylene. In particular, the molecular weight range of a given grade of polypropylene can be reduced by selectively reducing the molecular weight of the higher weight components. This can be effected, for example, by reaction with peroxides.

Polypropylene films of the present invention can be produced using conventional orientation techniques, and in general using sequential stretching in the machine and transverse directions. Typical machine direction stretch ratios are from 4 to 8 : 1, preferably 4.5 to 6.5 : 1, advantageously 5.6 : 1, and more particularly about 5.5 : 1. Typical transverse direction stretch ratios are from 8 to 13 : 1, preferably 9 to 11 : 1, and advantageously about 10 : 1.

Films of the present invention can also include additives which modify their frictional and/or antistatic properties, for example silicones and/or amides and/or other additives known in the art.

Polypropylene films of the present invention can be provided with any of the coatings and/or layers known in the art for polypropylene films and for the purposes of providing a similar effect.

Sealability can be provided by a cold seal layer, for example of an elastomeric composition, or by a hot seal layer, for example a polymeric layer containing units derived from at least one of ethylene, propylene and butene. Heat sealability can also be provided by using layers of copolymers of vinylidene chloride, for example with vinyl chloride and/or methyl methacrylate. Polymeric layers containing units derived from

2

vinylidene chloride and/or acrylics can also be used as primer layers, for example to aid printability.

Antiblock can be imparted by the inclusion of particulate materials in the coatings or layers, for example silica can be included.

While it is often preferred to produce heat seal and other layers on a polypropylene base layer by co-extrusion or extrusion coating, it is possible, and in some cases it is preferable, if not essential, to produce layers on the polypropylene using aqueous dispersions or solutions of the material for forming the desired layer.

Subsequent to orientation, the films of the present invention can, if desired, be subjected to further processing steps. For example, one or both sides of the film can be subjected to corona discharge in air or other gases or to flame treatment, both being used to enhance the wettability and/or the printability of the resultant film.

Polypropylene films of the present invention can be provided with metal layers, e.g. of aluminium, for example a metal layer can be deposited by a vapour technique or by lamination to a metal film using an adhesive layer. Such techniques are well known in the art for polypropylene films.

It is also possible to laminate polypropylene films of the present invention to other polymeric films to provide various effects. For example, it is possible to protect a layer of printed indicia by lamination with the indicia protected within the laminate.

Lamination using metal and/or other layers can also be used to modify the properties of the resultant composite film, for example reduce their permeability to oxygen and/or water vapour can be achieved, for example as is known in the art.

The following Example is given by way of illustration only:-

Various grades of polypropylene homopolymer were mixed with approximately 4 weight per cent of chalk having an average particle size of 3 microns.

Each mixture of polypropylene and chalk was then melt extruded to form a film which was stretched 5 times in the machine direction and then 9 times in the transverse direction using a stenter. The densities of the respective films produced were then ascertained and the results are given in Table 1.

TABLE 1

| Polymer | Melt Flow Index | Polydispersity Index | Chalk Content (%) | Film Density |
|---|---|---|---|---|
| A | 3.0 | 5.9 | 4.0 | 0.69 |
| B | 4.0 | 4.3 | 4.0 | 0.67 |
| C | 5.0 | 3.8 | 4.0 | 0.65 |
| D | 3.6 | 3.0 | 4.0 | 0.63 |

Polymers A - D were as follows:-

A - a commercially available standard reactor grade of polypropylene - not in accordance with the invention.

B - a slightly modified polypropylene

C - a highly modified polypropylene

D - a very highly modified polypropylene

## Claims

1. A voided polypropylene film, the polypropylene used to prepare the film having a melt flow index of 1.5 to 18.0 and a polydispersity index of from 3.0 to 5.5.

2. A polypropylene film according to claim 1, wherein the polypropylene has a melt index of 2.5 to 6.0.

3. A polypropylene film according to either of the preceding claims, wherein the polypropylene has a polydispersity index of from 3.5 to 4.2.

4. A polypropylene film according to any of the preceding claims having a density of less than 0.69 g/cm$^3$.

5. A polypropylene film according to claim 4 having a density of from 0.60 to 0.67 g/cm$^3$.

6. A polypropylene film according to any of the preceding claims, having at least one polymeric layer thereon.

7. A polypropylene film according to claim 6, having a polymeric layer on each surface.

8. A polypropylene film according to any of the preceding claims, having a heat sealable layer thereon.

9. A polymeric film according to any of the preceding claims, having at least one metal layer.

10. A polypropylene film according to any of the preceding claims, laminated to a further film comprising a polymeric layer.

European Patent
Office

**EUROPEAN SEARCH REPORT**

Application Number

EP  88 30 6179

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 206 040  (HOECHST) <br> * Page 2, lines 22-24; page 4, lines 4-17; page 7, lines 8-12 * | 1-10 | B 29 C   55/00 <br> C 08 J    5/18 |
| A | GB-A-2 100 268  (KIMBERLEY-CLARK) <br> * Claims 5,17 * | 1-3 | |
| A | JAPANESE PATENTS GAZETTE, Section Ch: Chemical, Week 8537, Class A, 23rd October 1985, page 19, no. 85-227701/37, Derwent Publications Ltd, London, GB; & JP-A-60 149 434 (MITSUI TOATSU CHEM. INC.) 06-08-1985 | 1-3 | |
| A | JAPANESE PATENTS GAZETTE, Section Ch: Chemical, Week 8726, Class AE, 12th August 1987, page 7, no. 87-183 256/26, Derwent Publications Ltd, London, GB; & JP-A-62 115 049 (SUMITOMO CHEM. IND. K.K.) 26-05-1987 | 1-3 | |

TECHNICAL FIELDS
SEARCHED (Int. Cl.4)

C 08 J
B 29 C

The present search report has been drawn up for all claims

| Place of search | Date of completion of the search | Examiner |
|---|---|---|
| THE HAGUE | 05-09-1988 | ATTALLA G. |